# DEMANDE DE BREVET EUROPEEN

(11) **EP 0 658 791 A1**
(43) Date de publication de la demande: **21.06.1995**
(21) Numéro de dépôt: 94402592.3
(22) Date de dépôt: 16.11.1994
(51) Int. Cl.: G02F 1/015, G02F 1/21

(54) **Cellule photorétractive**

(30) Priorité: 17.11.1993 FR 9313718
(71) Demandeur: FRANCE TELECOM, F-75015 Paris (FR)
(72) Inventeur: Pelekanos, Nikolaos, D-70569 Stuttgart (DE); Deveaud-Pledran, Benoît, F-01210 Ferney-Voltnire (FR); Lambert, Bertrand, F-22300 Lannion (FR)
(74) Mandataire: Martin, Jean-Jacques

(57) **Abrégé**

Cellule photoréfractive comportant :
- un matériau électro-optique (1),
- un premier et un deuxième matériaux (3,4) entre lesquels le matériau électro-optique est interposé,

ce premier (4) et ce deuxième (5) matériaux étant des puits quantiques séparés du matériau électro-optique par des matériaux formant barrières quantiques, les bandes d'énergie de conduction et de valence de ces matériaux étant telles que, en l'absence de champ électrique extérieur, les trous et électrons photoexcités par le rayonnement d'écriture dans la couche électro-optique passent par effet tunnel respectivement dans le premier (4) et le deuxième (5) matériaux.

## Description

La présente invention est relative à une cellule photoréfractive.

Les structures photoréfractives sont extrêmement prometteuses dans diverses applications et, en particulier, dans le domaine de la commutation optique. Elle permettent notamment de créer, par interaction de deux faisceaux laser d'écriture, un réseau de diffraction qui est modulé pour dévier à volonté un troisième faisceau, appelé faisceau de lecture.

Le principe de fonctionnement des matériaux photoréfractifs est l'inscription au sein même du matériau d'un réseau de variations d'indices optiques assez importantes pour diffracter efficacement les ondes optiques. Ce réseau d'indices dérive du réseau des charges électriques excitées optiquement par interférence de deux faisceaux d'écriture.

Classiquement, le matériau actif de réfraction est sollicité par un champ électrique extérieur auquel se superpose le champ électrique induit par le réseau de charges photogénérées, ces charges étant conservées par piégeage sur des centres profonds introduits volontairement ou involontairement dans le matériau.

Le matériau photoréfractif doit avoir les caractéristiques suivantes :
- il est semi-isolant en l'absence de rayonnement d'écriture,
- il présente un effet électro-optique aussi fort que possible afin de présenter des variations d'indices importantes,
- il possède un nombre suffisant de centres profonds pour produire des modifications locales du champ électrique.

Des structures à puits quantiques sont déjà connues et utilisées pour leurs propriétés photoréfractives. On peut notamment citer comme dispositifs photoréfractifs utilisant des matériaux à puits quantiques:
. les dispositifs couramment dénommés SEED (abréviation des termes anglais "Self-electro-optic effect device"), basés sur l'Effet Stark Confiné et décrits notamment dans : D.S. Chemla, T.C. Damen, D.A.B. Miller, A.C. Gossard, W. Wiegmann, Appl. Phys. Lett., 42, 864 (1983);
. les modulateurs Wannier Stark à superréseau décrits notamment dans : E. Bigan, L'Echo des Recherches, 149, 29 (1992).

Dans chacun de ces différents dispositifs, l'effet photoréfractif est obtenu par application d'un champ électrique extérieur sur le matériau actif.

Il a déjà été proposé dans la demande de brevet publiée sous le numéro FR-2 678 093 un dispositif photoréfractif dont le motif élémentaire est constitué par une couche électro-optique à puits quantiques, et de deux couches dopées avec des impuretés différentes entre lesquelles la couche active est interposée. Lorsque le matériau est éclairé par un rayonnement d'écriture, les couches dopées se chargent et induisent sur le matériau actif un champ électrique d'interférence qui commande l'électroréfraction de la couche active. Le matériau actif à multi-puits quantiques possède un fort coefficient électro-optique.

Cependant, si un effet photoréfractif important peut être obtenu sur une couche active dont l'épaisseur est voisine d'un micron, le faible coefficient d'absorption optique des centres profonds que constituent les couches dopées (10 cm⁻¹ pour une concentration de l'ordre de 10¹⁷ cm⁻³) implique une puissance optique incidente importante puisque seul le millième de la puissance optique disponible est absorbé dans chaque couche dopée en centres profonds, les épaisseurs de ces couches étant de l'ordre du micron.

On connaît également déjà des structures photoréfractives à multi-puits quantiques dans lesquelles sont implantés des centres profonds.

On pourra à cet égard avantageusement se référer à : D.D. Nolte, D.H. Olson, G.E. Doran, W.H. Knox, A.M. Glass, "Resonant photorefractive effect in semiinsulating multiple quantum wells", J. Opt. Soc. Am. B, 7, 2217-2225 (1990).

Ces centres profonds servent, en présence d'un champ électrique extérieur, à piéger les charges et à éviter leurs diffusions latérales. Néanmoins, si un effet photoréfractif a bien été obtenu, il n'utilise pas les avantages de l'Effet Stark Confiné puisque le champ électrique associé au réseau de charges est parallèle aux plans des puits quantiques.

Plus récemment, il a été proposé des structures à multi-puits quantiques à base de matériaux II-VI (par exemple GaAs/AlGaAs), dopés avec des inclusions servant de centres profonds piégeant les électrons.

Ces structures ont notamment été décrites dans: Partovi, Glass, Olson, Zydzik, Short, Feldmann, Austin, Opt. Lett., 17, 655 (1992).

Une telle structure permet, par application d'un champ électrique perpendiculaire aux plans des puits quantiques, d'induire la réfractivité des puits quantiques, par Effet Stark Confiné. Le dispositif impose néanmoins l'utilisation d'une polarisation alternative car les charges ne sont pas stockées correctement au voisinage des contacts.

Dans chacun des dispositifs décrits dans les publications citées ci-dessus, on tend à profiter à la fois des variations d'indices d'une structure à puits quantique soumise à un champ électrique perpendiculaire au plan des couches, et à piéger les charges photogénérées de manière efficace pour créer des variations locales du champ électrique. Le déplacement des charges peut se faire sur une distance macroscopique (de l'ordre du micron), ou sur une distance microscopique (de l'ordre de la centaine d'angstroms).

La présente invention vise à améliorer les techniques antérieures pour la longueur d'onde de 1,5 microns qui intéresse les télécommunications optiques. Elle permet d'améliorer notablement le rendement de photodiffraction et la vitesse de réponse.

Un des avantages importants de la cellule photoréfractive proposée par l'invention tient en ce qu'elle peut être utilisée sans qu'un champ électrique extérieur ne lui soit imposé.

La présente invention propose à ce effet une cellule photoréfractive destinée à être exposée à un rayonnement d'écriture qui est prévu pour créer un réseau de franges d'interférence dans ladite cellule, ainsi qu'à un rayonnement de lecture que diffracte le réseau d'interférences, cette cellule comportant au moins un empilement élémentaire comprenant :
- un matériau électro-optique présentant des coefficients électro-optiques élevés à la longueur d'onde du rayonnement de lecture,
- un premier et un deuxième matériaux entre lesquels le matériau électro-optique est interposé, ce premier et ce deuxième matériaux piégeant les charges photogénérées par le rayonnement d'écriture et imposant au matériau électro-optique un champ électrique ainsi photocréé,

caractérisée en ce que ce premier et ce deuxième matériaux sont des puits quantiques séparés du matériau électro-optique par des barrières quantiques, les bandes d'énergie de conduction et de valence du premier matériau formant puits quantique étant décalées de façon supérieure par rapport à celles du matériau électro-optique, les bandes d'énergie de conduction et de valence du second matériau étant décalées de façon inférieure par rapport à celles du matériau électro-optique, de sorte que, en l'absence de champ électrique extérieur, les trous et électrons photoexcités par le rayonnement d'écriture dans la couche électro-optique passent par effet tunnel respectivement dans le premier et deuxième matériaux formant puits quantiques.

Dans une structure de ce type, le matériau électro-optique est soumis au champ électrique obtenu par séparation des électrons et des trous photocréés dans celui-ci. Ces deux types de porteurs sont séparés par la présence de puits pièges, l'un pour les électrons et l'autre pour les trous, de part et d'autre de chaque puits électro-optique. Dans le cas où l'on éclaire avec un réseau de franges, le champ est créé à l'endroit même des franges et est perpendiculaire aux puits.

Ainsi, dans le cas où le matériau électro-optique est modulé par effet Stark Confiné, le réseau d'interférences module l'indice optique de la superstructure au voisinage de la longueur d'onde de résonance excitonique du puits quantique que constitue le matériau électro-optique.

Conformément à un aspect particulièrement avantageux de l'invention, les pièges de porteurs sont des inclusions d'un (de) matériau(x) formant puits quantique(s) à l'intérieur d'un matériau matriciel formant barrière quantique.

De façon générale, la fonction du piégeage est de bloquer latéralement les charges, de sorte que les porteurs sont non seulement confinés selon l'axe de croissance de l'empilement pour créer un champ électrique, mais également empêchés de diffuser latéralement.

La structure à inclusions proposée par l'invention permet un blocage des charges selon des réseaux de charges stables dans le temps : les réseaux de charges réalisés se maintiennent en dépit des champs électriques présents et des phénomènes de diffusion.

Cette structure à inclusions s'avère beaucoup plus efficace que ces structures sans inclusions de piégeage décrites dans EP-492 420 et EP-461 042.

La présente invention présente ainsi le double avantage de pouvoir piéger un grand nombre de charges, et de travailler au voisinage d'une résonance excitonique, c'est-à-dire dans une région où les modifications d'indices sont importantes. Elle améliore ainsi nettement les méthodes antérieures et, en particulier, les dispositions décrites dans les publications de Partovi et al..

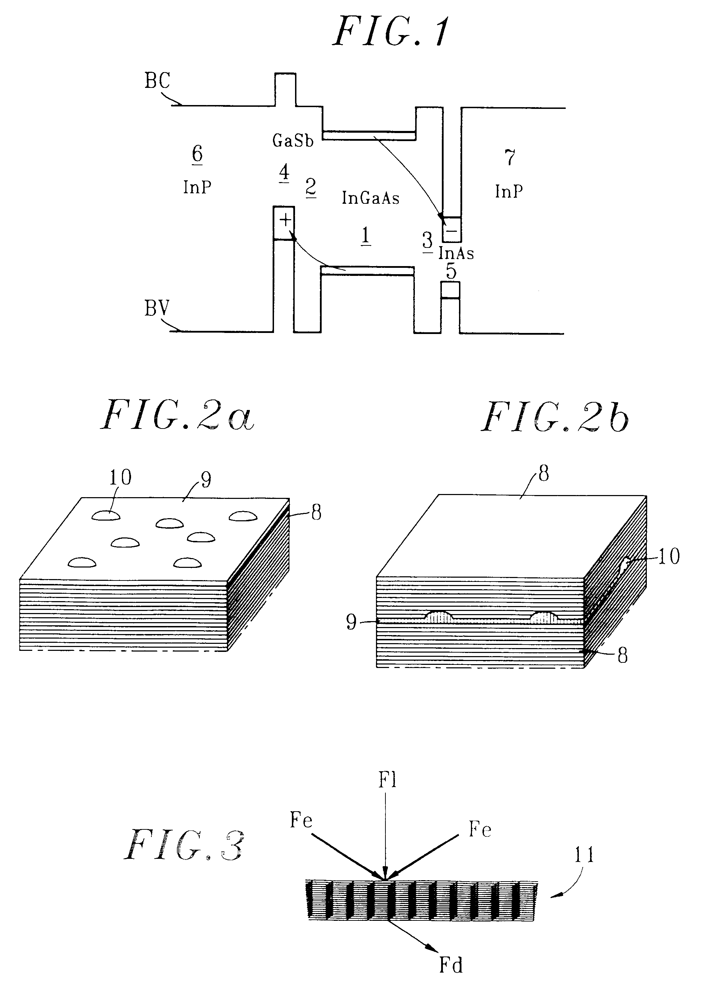

La description qui suit de l'invention est illustrative et non limitative. Elle doit être lue en regard des dessins annexés sur lesquels :
. la figure 1 illustre schématiquement les niveaux d'énergie bas et hauts des bandes de conduction et de valence dans l'épaisseur d'un motif élémentaire d'une cellule conforme à l'invention ;
. les figures 2a et 2b illustrent la réalisation d'inclusions InAs dans une matrice InP ;
. la figure 3 illustre une utilisation d'un composant conforme à l'invention.

Le motif élémentaire d'une cellule conforme à l'invention a été illustré sur la figure 1.

Ce motif élémentaire comporte un puits quantique optiquement actif 1 entouré de part et d'autre de deux barrières 2 et 3. De part et d'autre de l'ensemble constitué par ces barrières 2 et 3 et par le puits actif 1 sont disposés deux puits quantiques 4 et 5 destinés à piéger les charges. Ces puits quantiques 4 et 5 sont chacun interposés entre une barrière 2 ou 3 et une couche de matériau matriciel 6 ou 7.

Ce motif élémentaire est répété un grand nombre de fois (de l'ordre d'une centaine) afin d'améliorer l'efficacité de la diffraction.

La zone active 1 de ce motif élémentaire est constituée d'un puits d'InGaAs à l'accord de maille sur InP, avec une concentration d'Indium de l'ordre de 47 %. La largeur de ce puits est de l'ordre de 100 angstroms.

Le puits de InGaAs constitue le matériau électro-optique de la structure. C'est, d'une part, dans ce puits qu'a lieu l'absorption optique qui permet de créer les deux types de porteurs. C'est, d'autre part, également dans ce puits que les transitions d'énergie représentées sur la figure 1 sont modifiées par Effet Stark par la présence du champ électrique induit par les porteurs piégés de part et d'autre. La zone 1 présente donc sous l'effet du champ induit par ces porteurs photogénérés des variations d'indices importantes.

L'ajustement de la concentration en Indium autour de 47 % permet de placer la longueur d'onde de résonance excitonique à la longueur d'onde de travail désirée.

Les barrières 2 et 3 de part et d'autre de ce puits 1 sont constituées de couches très minces d'InP. En variante, on peut utiliser d'autres matériaux pour ces barrières : par exemple InAlAs accordé sur InP.

Les barrières 2 et 3 permettent le passage par effet tunnel des électrons et des trous vers les puits quantiques 4 et 5.

On peut ajuster l'épaisseur de ces barrières 2 et 3, afin de jouer sur la rapidité de réponse et la sensibilité de la structure. Les épaisseurs sont de l'ordre de 50 angstroms si l'on veut des temps de réponse plus rapides que 100 ps.

Le puits 5 est constitué par une couche mince de InAs qui présente la particularité de posséder un décalage important de bande de conduction par rapport au matériau du puits quantique actif, c'est-à-dire par rapport à InGaAs, tandis que son extremum de bande de valence est au-dessous de celui dudit matériau actif. Ainsi, ce puits 5 de InAs constitue un puits pour les électrons et il ne peut piéger les trous.

A l'inverse, le puits 4 est constitué d'une couche mince de GaSb. Elle constitue un puits de potentiel profond pour les trous, et pas pour les électrons. On peut ainsi y piéger aisément les trous photocréés.

Conformément à l'invention, lorsque la cellule élémentaire qui vient d'être décrite est sollicitée par un faisceau d'écriture, la couche 1 constituant le puits quantique optiquement actif photogénère des électrons et des trous. Ceux-ci s'échappent de ce puits actif 1 par effet tunnel à travers les barrières 2 et 3 pour tomber respectivement dans les puits 5 et 4.

Egalement, conformément à un aspect avantageux de l'invention, les puits 4 et 5, qui piègent les électrons et les trous forment dans la matrice InP qui les reçoit des inclusions tridimensionnelles. Ces inclusions tridimensionnelles permettent d'éviter les phénomènes de diffusions latérales.

La réalisation de ce type d'inclusions est illustrée sur les figures 2a et 2b.

Le matériau à inclure est en particulier choisi pour son fort désaccord de maille avec le matériau de la matrice 8. Dans l'exemple ici décrit, InAs ou GaSb présente un désaccord de maille d'environ 3 % avec la couche, ce qui influence fortement leur mode de croissance sur une matrice d'InP.

On fait croître, dans un premier temps, la couche 8 matricielle d'InP (croissance par jets moléculaires dans notre exemple) juqu'à l'épaisseur choisie.

Dans un deuxième temps, l'on dépose sur cette matrice 8 une fine couche 9 du matériau à inclure.

La première couche moléculaire déposée accommode élastiquement la différence de paramètre de maille et se dépose de façon uniforme. Dès la deuxième monocouche, on passe, à la température usuelle de croissance (500-550°C), à un mode de croissance tridimensionnel. Ainsi, des îlots 10 de matériau à inclure (d'InAs ou de GaSb) sont formés à la surface de la couche matricielle 8 (figure 2a).

Ce phénomène de formation d'îlots a notamment été plus particulièrement décrit dans la publication suivante: L. Goldstein, F. Glas, J.Y. Marzin, M.N. Charasse, G. Le Roux, Appl. Phys. Lett., 47, 1099 (1985).

La taille caractéristique de ces îlots 10 est très faible ( ≈ 100 angstroms) devant la période du réseau d'interférences ( ≈ 1 micron) et permet donc l'inscription de n'importe quel réseau photoréfractif.

L'on reprend ensuite la croissance du matériau matriciel (ici InP), de sorte que ces îlots 10 constituent des inclusions contraintes dans la matrice d.

Les inclusions ne contiennent pas de dislocation et conservent une bonne qualité, ce qui permet des conditions de croissance ultérieure optimales.

InAs et GaSb possèdent une bande interdite plus petite que celle d'InP. Leur disposition permet à InAs d'être un piège à électrons à la fois par rapport à InP et par rapport à InGaAs, et à GaSb d'être un piège à trous à la fois vis-à-vis de InP et de InGaAs. Ainsi, les inclusions 10 qu'ils réalisent piègent les charges émises par le puits optiquement actif dont elles sont voisines sans que les charges ainsi piégées ne soient soumises à diffusion latérale.

L'étude en photoluminescence de telles inclusions d'InAs dans GaAs et dans InP a montré que le piégeage des porteurs y était très efficace puisque la luminescence provenant de ces inclusions est très intense (beaucoup plus intense que celle provenant de la matrice de GaAs ou d'InP). De même, ces études démontrent la bonne qualité optique des inclusions. Leur étude en transmission montre que la luminescence est intrinsèque, c'est-à-dire liée à la présence d'une forte densité d'états conjointe à l'énergie de la luminescence.

La taille des îlots, et donc la position de la raie de luminescence (ou l'énergie de piégeage) dépendent directement de la quantité d'InAs déposée après le passage en mode de croissance tridimensionnel.

Les énergies de confinement peuvent aller de 100 à 300 meV à la fois pour les électrons et pour les trous, ce qui permet une bonne localisation latérale même à température ambiante et sous l'influence d'un fort champ électrique latéral.

La densité des îlots dans un plan est très élevée (environ 10¹¹ cm⁻²), soit un îlot tous les 300 angstroms. On pourra donc capturer un grand nombre de porteurs sur un plan d'inclusions (quelques 10¹¹ cm⁻²). L'insertion des îlots est compatible avec la croissance ultérieure d'une structure à puits quantiques de bonne qualité.

Conformément à une caractéristique avantageuse de l'invention, le matériau matriciel InP est transparent à la longueur d'onde qui est utilisée à la fois pour l'écriture et pour la lecture de l'effet photoréfractif.

La cellule photoréfractive de l'invention peut éventuellement, mais non nécessairement, être complétée par des contacts électriques. Dans l'exemple décrit, ces contacts sont avantageusement constitués par des couches InP fortement dopées n et p disposées de part et d'autre de la structure à puits quantiques. Ces contacts permettent de soumettre la cellule à un champ électrique non nul avant tout éclairage. Dans la mesure où l'effet Stark Confiné est quadratique en champ électrique, l'application préalable d'un champ électrique permet d'obtenir un effet plus important pour la même quantité de charges piégées.

La technique de croissance utilisée est l'épitaxie par jets moléculaires, mais d'autres techniques, telles que la croissance sous vide du type connu sous la dénomination usuelle MOCVD, peuvent être envisagées.

Les matériaux cités jusqu'à présent sont à base de GaAs où d'InP, mais on peut tout à fait envisager d'autres III-V (GaSb par exemple) où d'autres familles de matériaux (II-VI par exemple).

Une utilisation holographique de la cellule qui vient d'être décrite a été illustrée sur la figure 3. Cette cellule y a été référencée par 11.

L'inscription d'un réseau de diffraction sur cette cellule 11 se fait par interaction de deux faisceaux d'écriture Fe symétriques par rapport à la normale à la surface de la cellule 11. La longueur d'onde de ces deux faisceaux Fe est telle qu'ils sont absorbés efficacement par la structure à puits quantiques et non par les couches de contact éventuelles en InP. On doit donc utiliser une longueur d'onde comprise entre 900 nm et 1500 nm. La puissance nécessaire à écrire rapidement un réseau de charges est de l'ordre de 0.1 mW/cm².

Le faisceau Fl de lecture qui doit être défléchi en un faisceau Fd par l'hologramme ainsi enregistré a une longueur d'onde légèrement supérieure à celle de la résonance excitonique, c'est-à-dire 1500 nm. La puissance de ce second faisceau Fl n'importe pas.

La présente invention autorise la mise en oeuvre d'un effet photoréfractif important à l'aide de couches minces de matériaux semi-conducteurs. Elle présente l'avantage de fonctionner dans la gamme utile aux télécommunications optiques, c'est-à-dire 1,5 microns, et de permettre en outre une fréquence de répétition élevée. La possibilité de fonctionner sans contact autorise l'utilisation de grandes surfaces.

En particulier, la cellule conforme à l'invention est particulièrement adaptée aux applications où l'on cherche à connecter des matrices de grandes dimensions de signaux optiques, puisqu'elle est rapide et fonctionne sans contact électrique avec une efficacité de diffraction satisfaisante.

## Revendications

1. Cellule photoréfractive destinée à être exposée à un rayonnement d'écriture qui est prévu pour créer un réseau de franges d'interférence dans ladite cellule, ainsi qu'à un rayonnement de lecture que diffracte le réseau d'interférences, cette cellule comportant au moins un empilement élémentaire comprenant :
- un matériau électro-optique (1) présentant des coefficients électro-optiques élevés à la longueur d'onde du rayonnement de lecture,
- un premier et un deuxième matériaux (4,5) entre lesquels le matériau électro-optique est interposé, ce premier et ce deuxième matériaux piégeant les charges photogénérées par le rayonnement d'écriture et imposant au matériau électro-optique un champ électrique ainsi photocréé,
caractérisée en ce que ce premier (4) et ce deuxième (5) matériaux sont des puits quantiques séparés du matériau électro-optique par des barrières quantiques (2,3), les bandes d'énergie de conduction et de valence du premier matériau (4) formant puits quantique étant décalées de façon supérieure par rapport à celles du matériau électro-optique (1), les bandes d'énergie de conduction et de valence du second matériau (5) étant décalées de façon inférieure par rapport à celles du matériau électro-optique, de sorte que, en l'absence de champ électrique extérieur, les trous et électrons photoexcités par le rayonnement d'écriture dans la couche électro-optique passent par effet tunnel respectivement dans le premier (4) et le deuxième (5) matériaux formant puits quantiques.

2. Cellule selon la revendication 1, caractérisée en ce que le matériau électro-optique (1), ainsi que le premier et le deuxième matériaux (4,5) formant puits quantiques sont chacun interposés entre deux couches d'un même matériau matriciel (2,3,6,7) formant barrière quantique.

3. Cellule selon la revendication 2, caractérisée en ce que le premier et/ou le deuxième matériaux formant puits quantiques sont des inclusions dans le matériau matriciel.

4. Cellule selon la revendication 3, caractérisée en ce que le premier et/ou le deuxième matériaux présentent un fort désaccord de maille par rapport au matériau matriciel.

5. Cellule selon l'une des revendications 2 à 4, caractérisée en ce que le matériau matriciel est InP.

6. Cellule selon l'une des revendications précédentes, caractérisée en ce que la longueur d'onde du rayonnement de lecture est au voisinage de 1,5µm

7. Cellule selon l'une des revendications précédentes, caracterisée en ce que le matériau électro-optique est InGaAs.

8. Cellule selon l'une des revendication 5 à 7, caracterisée en ce que le matériau du puits dans lequel les électrons sont piégés est InAs.

9. Cellule selon l'une des revendication 5 à 8, caracterisée en ce que le matériau du puits dans lequel les trous sont piégés est GaSb.

10. Cellule selon l'une des revendications précédentes, caracterisée en ce que la longueur d'onde du rayonnement d'écriture est comprise entre 900 et 1500 nm.
